# EUROPEAN PATENT APPLICATION

(11) **EP 1 712 988 A1**
(43) Date of publication of application: **18.10.2006**
(21) Application number: 05103039.3
(22) Date of filing: 15.04.2005
(51) Int. Cl.: G06F 9/44

(54) **Apparatus and Method for Efficient Encoding of Application Definition Using Contiguous Arrays**

(71) Applicant: Research In Motion Limited, Waterloo, Ontario N2L 3W8 (CA)
(72) Inventor: Vitanov, Kamen B., L5M 6E8, Mississauga, (CA); Doktorova, Laura, L5M 6E1, Mississauga, (CA); Shenfield, Michael, L4C 3S9, Richmond Hill, (CA); Qing, Richard, K2G 5G6, Ottawa, (CA)
(74) Representative: Rickard, David John

(57) **Abstract**

A system and method for the simplification of data structures, particularly those used for wireless communications, encodes data structures for efficient storage and access. Wireless devices are provisioned with user applications for accessing remote services, such as World Wide Web services. The user applications comprise a plurality of component definitions which typically describe complex data structures for execution by a runtime environment. The runtime environment is conditioned to use a manner to encode such data structures in flat arrays of primitive types.

## Description

This application relates generally to wireless communications and wireless communications devices and, in particular, to a method and apparatus for the efficient encoding of an application definition using contiguous arrays.

The acceptance of wireless devices as a preferred personal communications medium has created a growing demand for such devices. Users of such devices also increasingly expect more functionality and a broader range of services to be made available through such devices. Not only is there a demand for more functionality, there is also a demand for faster response times and more efficient access to remote services.

A major challenge is faced in exposing wireless devices to complex data sources, such as web services, due to the size and complexity of the data structures communicated from such sources. In wired networks and devices where resources and efficiency are not a significant concern, it is permissible to transmit, process and store large and complex data structures.

Complex data structures containing many objects and levels of nesting introduce a significant memory overhead on wireless devices. This impacts performance when storing to and retrieving from a memory store.

Consequently, what is desired is a method and apparatus to efficiently encode complex data structures of an application definition.

### SUMMARY

Preferably the invention provides an apparatus and method for efficiently encoding complex data structures, such as those used in an application definition for use on a wireless device that promotes efficient data storage, efficient data storage and retrieval, and transparent, efficient wireless messaging between wireless devices and remote services, such as worldwide web services.

In accordance with an aspect of the invention there is preferably provided a system for simplifying the representation of a component comprising a complex data structure, said complex data structure described by a component definition. The system comprises a runtime environment for executing applications comprising component definitions wherein the runtime environment comprises computer executable code for: accepting as input at least one component definition; and defining a simplified data structure comprising flat arrays to represent the complex data structures described by the at least one component definition. The computer executable code uses the simplified data structure while executing an application defined by the at least one component definition and, if applicable, while persisting the component described by the component definition (e.g. to a store coupled to the system). Preferably, the computer executable code traverses a particular one of the at least one component definitions in depth first traverse order to sequentially define the simplified data structure for the component definitions within the arrays.

According to one feature, the computer executable code preferably defines a plurality of arrays for storing structural description information, component field information, and objects comprising atomic elements described by the component definition. Preferably first, second and third arrays are defined respectively for each such information.

The arrays may be associated to provide a reference-based relationship between the information stored in the arrays such as wherein the relationships are selected from the group consisting of: a component to its fields; a component to its objects; a field to its objects; and a field to its components.

In accordance with a further aspect there is preferably provided a method for simplifying the representation of a component comprising a complex data structure, said complex data structure described by a component definition, the method comprising: provisioning a runtime environment which executes applications comprising component definitions with computer executable code for: accepting as input at least one component definition; and defining a simplified data structure comprising flat arrays to represent the complex data structures described by the at least one component definition.

Another aspect preferably provides a memory for storing data for access by a runtime environment for executing on a data processing device an application comprising component definitions, said definitions describing complex data structures, comprising: a data structure stored in said memory, said data structure comprising a plurality of arrays for storing structural description information, component field information, and objects comprising atomic elements described by the component definition, said arrays including references among the arrays to denote relationships between a component, and any fields and objects described by the component definition.

### BRIEF DESCRIPTION OF THE DRAWINGS

Further features and advantages of the present invention will become apparent from the following detailed description, taken in combination with the appended drawings, in which:

FIG. 1 is a block diagram of a network system including wireless devices and a proxy in accordance with an embodiment of the invention;

FIG. 2 is a schematic diagram illustrating a process for creating and enabling a system in accordance with an embodiment of the invention;

FIG. 3 is a block diagram of a wireless device in accordance with an embodiment of the invention;

FIG. 4 is a schematic representation of a representation of a complex data structure after it has been simplified using operations shown in FIG. 5; and

FIG. 5 is a flow chart of operations in accordance with an embodiment of the invention for flattening complex data structures in contiguous arrays.

It will be noted that throughout the appended drawings, like features are identified by like reference numerals.

### DETAILS

The invention provides a system and method for the simplification of data structures, particularly those used for wireless communications. Wireless devices are provisioned with user applications for accessing remote services, such as World Wide Web services. The user applications comprise a plurality of component definitions which typically describe complex data structures for execution by a runtime environment. The runtime environment is conditioned to use a manner to encode such data structures in flat arrays of primitive types.

### System Overview

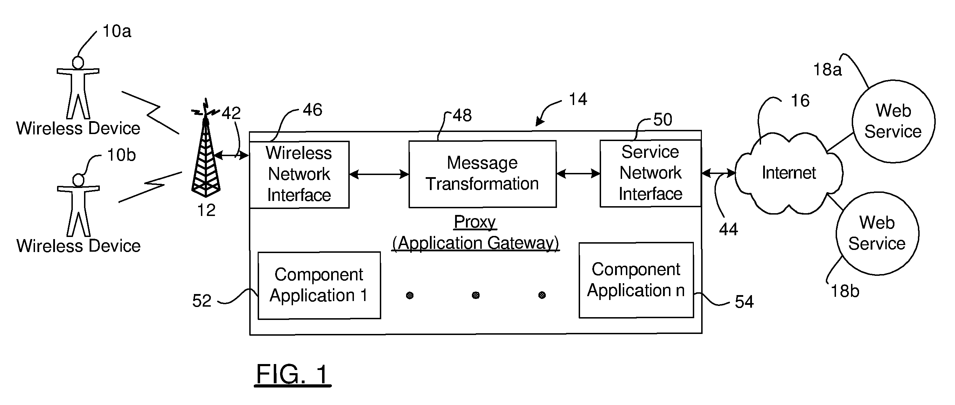

Fig. 1 is a block diagram of a network in which wireless device users 10a, 10b operate wireless devices to send web service request messages via a public domain carrier 12 to a stateful proxy which in one embodiment is an application gateway 14. The application gateway 14 forwards the web service request messages through a service network such as the Internet 16 to an appropriate web service 18a, 18b. The messages are processed by the appropriate web service 18a, 18b and returned through the Internet 16 to the application gateway 14. The public domain carrier 12 forwards the response messages to the wireless device 10a, 10b which processes the response and displays, as applicable, response content to the wireless device users 10a, 10b.

The application gateway 14 supports a wireless network interface 46 having a link 42 to the wireless network 12. A message transformation function 48 receives messages from the wireless network interface 46 and processes the messages before forwarding the messages to a service network interface 50. The service network interface 50 has a link 44 to the service network 16 (the Internet, for example) over which it forwards the messages to an appropriate web service(s).

In accordance with an embodiment of the invention, the application gateway 14 is provisioned with a plurality of component-based applications 52, 54 which configure the gateway 14 for processing the various messages. Gateway 14 may also provision the wireless devices 10a and 10b with portions of the component-based applications 52, 54 to enable the devices 10a and 10b to access the web services 18a and 18b via the gateway 14.

With reference to FIG. 2, a wireless application developer 22 uses a specification of a web service 20 and an application developer toolkit to create component -based applications 24 (of which component applications 52 and 54 are examples) including component definitions, mappings, and other artifacts for enabling a system in accordance with an embodiment of the invention. These applications 24 are used by the application gateway 14 and wireless devices 10a and 10b to make and process service request and service response messages. For example, mappings from application 24 may comprise message mappings for gateway 14 to define a relationship in content between messages over link 42 and messages over link 44. Component definitions from application 24 may define various types of components for configuring the operations of wireless devices 10a and 10b including, but not limited to, data, user interface, control, message and function components. Such definitions are typically expressed in a structured definition language such as extensible Mark-up Language (XML).

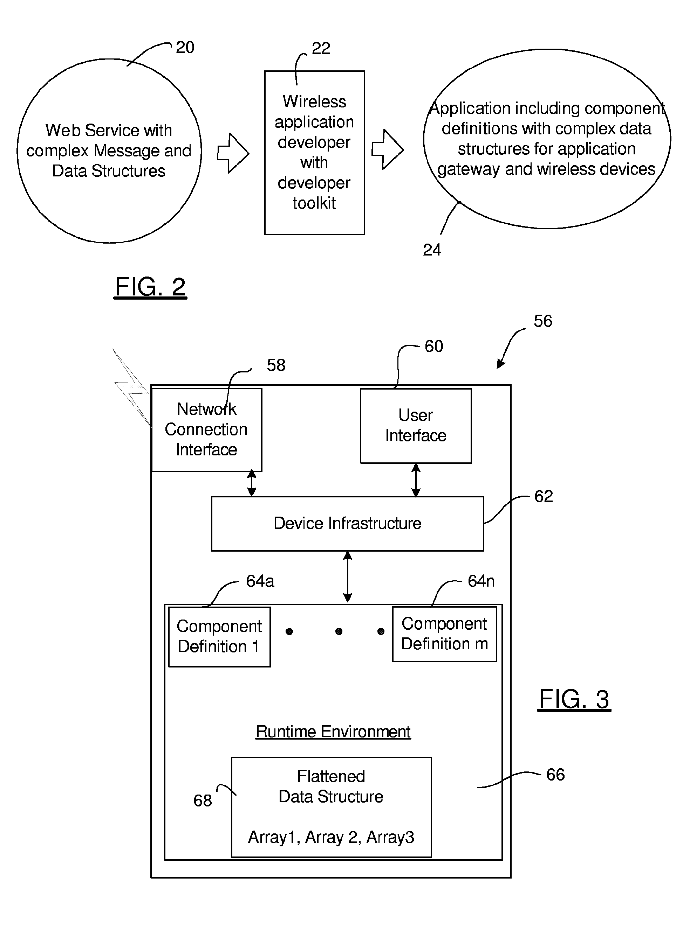

FIG. 3 is a block diagram of a wireless device 56 in accordance with an embodiment of the invention. The wireless device 56 includes a network connection interface 58 that is well known in the art and used to communicate wirelessly with the public domain carrier 12. The wireless device 56 further includes a user interface 60, which may be a keypad, a touch sensitive screen, voice recognition software, or any other user interface for wireless devices. A device infrastructure 62 includes memory, processor(s), peripheral ports, keypad, display and other hardware components required to support the functionality of the wireless device 56.

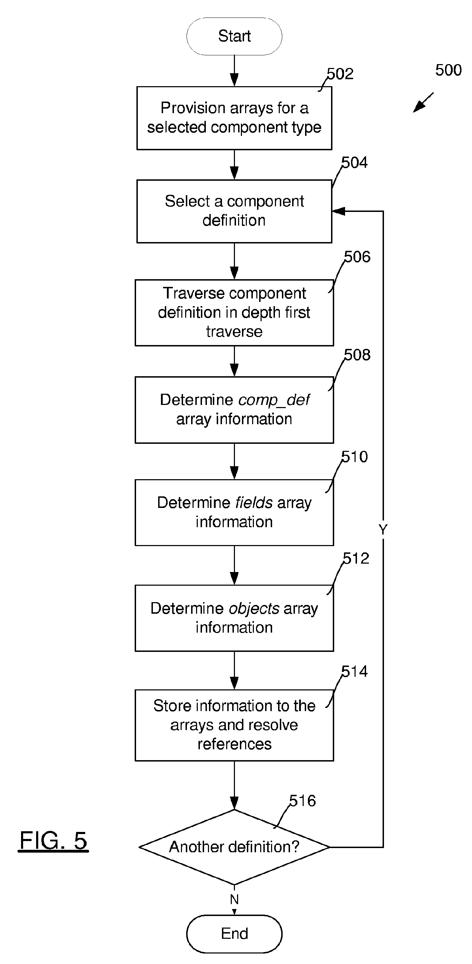

A runtime environment 66 provides basic resources and services and executes applications defined by the component definitions 64a-64m and other artifacts 24. The runtime environment may be configured as an intelligent container. Component definitions 64a-64m typically uses complex data structures containing many objects and levels of nesting. Processing these structures in a wireless device can entail significant memory and processing resources which may impact on the user experience. In accordance with an embodiment of the invention as will be explained below with reference to FIG.5, runtime environment 66 simplifies the complex data structures by "flattening" into arrays of primitive types. These types may include byte, int, long, String, etc. types for Java™-based programming languages.

### Operation Overview

### Data Structure Simplification

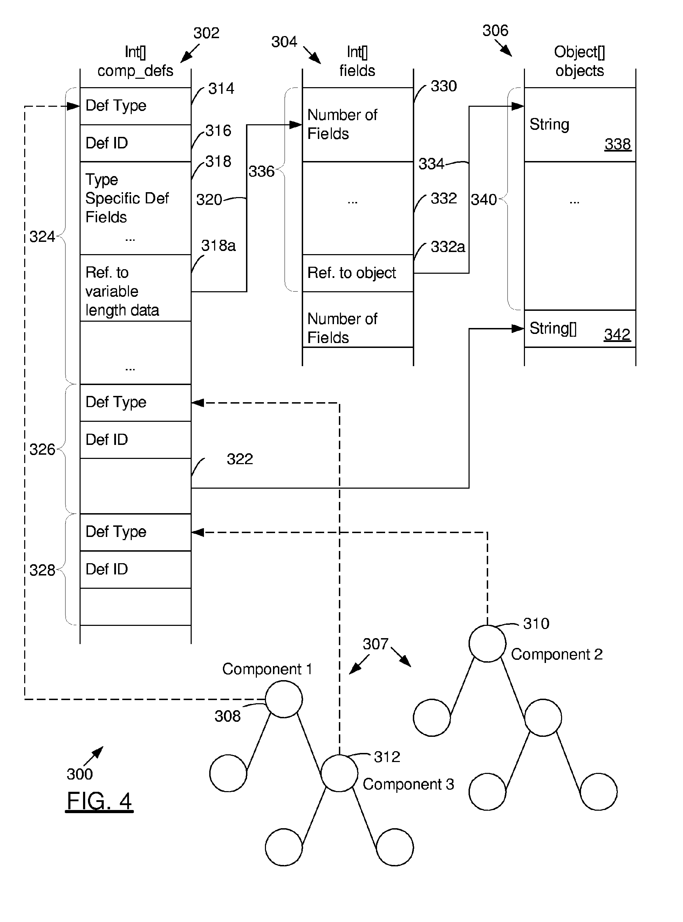

FIG. 4 is a schematic representation of arrays 300 for providing a runtime implementation of complex data structures 307. Arrays 300 comprise a first array 302 of primitive type integer (int), a second array 304 of primitive type int and a third array 304 of type objects. By using these three arrays 302, 304 and 306, any hierarchical data structure can be represented in a flattened and reference-based fashion to facilitate a more compact runtime representation than the traditional object-based component definition runtime representation. Arrays 302 and 304 are shown as integer types but persons of ordinary skill in the art will appreciate that a minimum size of entry is not necessary to be the size of integer (or 32 bits in many runtime systems) as a byte, for example, can be used to represent a set of properties of a component type.

The first array 302, or *comp_defs* provides the structural description of application components, which contains the following information for each application component:

*DefType:* One of the common properties of component definition representation is the *DefType* 314 which represents the type of the component. As noted earlier, various component types may be defined for the runtime environment and the types of components usually include but are not limited to, Data, UI Control, Message and Functions. The portion of array 302 utilized representing a size of a definition (indicated by reference 324 for component 1 308, by 326 for component 3 310 and 328 for component 2 312) for different types are likely different, for each component type would likely have its own specific definition fields (i.e. *TypeSpecificDefFields* 318).

*DefID:* Another of the common properties of the component definition representation is the *DefID* 316 which represents the ID of component. *DefType* and *DefID* together identify a definition of component, i.e., a particular *DefID* itself cannot identify a definition among all types of component definitions, but its value should be unique in the group of component definitions that have the same definition type.

*TypeSpecificDefFields:* These fields 318 are used to identify the specific features of a definition of a specific component type. For example though not shown, a Data component of an application could have a field (integer or byte) to indicate if a data definition has a primary key and, if it has, the index of that primary key field of data. Another example, which is shown in FIG. 4, is a definition field 318a which contains an index that refers to the *fields* array 304 where fields are defined. Definition field 318a may indicate that the data component does not have any data fields with a value of -1.

It is noted that all component definitions having the same *DefType* are represented by the same portion of *comp_defs* array 302.

The second array 304, or *fields* describes the properties of component fields, such as number of fields 330, field type that can be either a primitive type or data component, runtime properties of field such as if it has default value. For example property 332 references a default value using a pointer to *objects* array 306. Again, different types of components would have different properties and therefore, the amount of bytes of *fields* array 304 taken by this portion of a definition may differ.

The third array 306, or *objects* provides a place to store external objects that are taken as atomic elements in a component definition. For example, a String object 338, 342 that is referred by a component definition (e.g. 308) as a default value of a field could be stored in the *objects* array 306. In summary, a hierarchical component definition is flattened into three compact arrays: e.g. two integer-type arrays and one object array. One type of component definition (e.g. Data) would have its own separate set of these three arrays from another type of component definition (e.g. Message). By doing this, runtime memory used by component definition representation is dramatically decreased.

FIG. 5 illustrates a flow chart of operations 500 in accordance with an embodiment of the invention and embodied in computer executable code for a runtime environment to simplify a complex data structure definition, flattening the structure into three arrays (e.g. 302-306) as discussed. Operations for flattening component definitions of a single selected component type (e.g. data) are illustrated. At step 502 instances of the three arrays 302-306 are provisioned and at step 504 a specific data component definition is selected. The definition is traversed in depth first traverse and parsed to glean the required information. At steps 508, 510 and 512 information for each of the *comp_def, fields* and *objects* arrays 302-306 is determined. For example, a *DefID* 316 is generated for this instance of the particular *DefType* 314. *TypeSpecificDefFields* 316 are determined (including provisioning an index 318a to the fields array 304 for subsequent resolving as necessary). Particular field information 332 for the *fields* array is determined and a count of the number of fields 330 is determined. Objects (e.g. 338) are determined for the *objects* array 306. At step 514, the arrays 302-304 can be populated with the determined information and appropriate references resolved (e.g. the index from *comp_def* to *fields,* a particular field's default value reference index 332a to *objects,* etc.).

Sequential representation of a component definition within the arrays 302-306 means that the information for a subsequent definition is stored into the arrays 302-306 after all the information for the current definition is stored. At step 516 a determination is made whether another definition is available for simplifying. If so, operations 500 may loop to step 504. Otherwise they end.

References or relationships within a definition are represented in the flat array structure 300. The aggregation or "has" relationship within one component definition (e.g. one component has 3 fields, a, b and c) is represented as a reference-to relationship between the three arrays. There are four kinds of reference-to relationships:

*comp_defs-to-fields:* A component is composed of fields. A field definition is represented in fields array 304; to refer to the definitions of fields that the component has, *comp_def* array 302 keeps an index 320 at an entry 318a of the array 302 to the *fields* array 304 where its field definitions start (e.g. 330). For example, a data component A has 6 fields; the definition for each field takes 3 integers.

*comp_defs-to-objects: comp_defs* 302 can also refer to *objects* 306. For example, to represent an enumeration data type "Color", which defines three enumeration values, "Red", "Green", "Blue" the high level description of "Color" (e.g. Component 3 in FIG. 4) is placed in *comp_defs* 322, then its values (field values) in *objects* 306 as a String[] object 342.

*fields-to-objects:* A field of a component could have a default value - in this case, the field definition (e.g. 332a) in *fields* 304 may just contain an index 334 to the default value 338 in *objects* array 306.

*fields-to-comp:* A field could be of type data component - in this case the file definition in fields would contain the *DefID* of that data component, which can be used to uniquely identify that data component's definition (example not shown).

The flat array structure proposed may be useful both during runtime for executing the application and for persisting data in accordance with the data structures defined by the component definitions. As will be appreciated by those skilled in the art, the invention allows application developers to improve wireless device performance by reducing data processing overheads. It also allows application developers to reduce storage space requirements on the wireless devices 10a, 10b by reducing space-consuming complex data structures.

Although the invention has been explained with explicit reference to web services, those skilled in the art will appreciate that the invention can be used to efficiently access any remote service.

The embodiment(s) of the invention described above is (are) intended to be exemplary only. The scope of the invention is therefore intended to be limited solely by the scope of the appended claims.

## Claims

1. A system for simplifying the representation of a component comprising a complex data structure, said complex data structure described by a component definition, the system comprising:
a runtime environment for executing applications comprising component definitions, the runtime environment comprising computer executable code for: accepting as input at least one component definition; and defining a simplified data structure comprising flat arrays to represent a complex data structure described by the at least one component definition.

2. The system as claimed in claim 1 wherein the computer executable code uses said simplified data structure while executing an application defined by the at least one component definition and while persisting the component described by the component definition.

3. The system as claimed in any one of claims 1 to 2 wherein the computer executable code traverses a particular one of the at least one component definitions in depth first traverse order to sequentially define the simplified data structure for the component definitions within the arrays.

4. The system as claimed in any one of claims 1 to 3 wherein the computer executable code defines a plurality of arrays for storing structural description information, component field information, and objects comprising atomic elements described by the component definition.

5. The system as claimed in claim 4 wherein the computer executable code defines a first array for storing the structural description information of the component definition.

6. The system as claimed in claim 5 wherein the computer executable code defines a second array for storing the component field information.

7. The system as claimed in claim 6 wherein the computer executable code defines a third array for storing the objects comprising atomic elements of the component definition.

8. The system as claimed in any one of claims 4 to 7 wherein the structural description information comprises a definition type and a definition identifier to distinguish a particular simplified data structure among those having a common definition type.

9. The system as claimed in any one of claims 4 to 8 wherein the component field information describes the properties of particular fields described by the component definition.

10. The system as claimed in any one of claims 1 to 9 wherein the computer executable code associates the arrays to provide a reference-based relationship between the information stored in the arrays.

11. The system as claimed in claim 9 wherein the relationships are selected from the group consisting of: a component to its fields; a component to its objects; a field to its objects; and a field to its components.

12. A method for simplifying the representation of a component comprising a complex data structure, said complex data structure described by a component definition, the method comprising:
provisioning a runtime environment which executes applications comprising component definitions with computer executable code for: accepting as input at least one component definition; and defining a simplified data structure comprising flat arrays to represent the complex data structures described by the at least one component definition.

13. The method as claimed in claim 12 wherein the computer executable code uses said simplified data structure while executing an application defined by the at least one component definition and while persisting the component described by the component definition.

14. The method as claimed in any one of claims 12 to 13 wherein the computer executable code traverses a particular one of the at least one component definitions in depth first traverse order to sequentially define the simplified data structure for the component definitions within the arrays.

15. The method as claimed in any one of claims 12 to 14 wherein the computer executable code defines a plurality of arrays for storing structural description information, component field information, and objects comprising atomic elements described by the component definition.

16. The method as claimed in claim 15 wherein the computer executable code defines a first array for storing the structural description information of the component definition.

17. The method as claimed in claim 16 wherein the computer executable code defines a second array for storing the component field information.

18. The method as claimed in claim 17 wherein the computer executable code defines a third array for storing the objects comprising atomic elements of the component definition.

19. The method as claimed in any one of claims 12 to 18 wherein the computer executable code associates the arrays to provide a reference-based relationship between the information stored in the arrays and wherein the relationships are selected from the group consisting of: a component to its fields; a component to its objects; a field to its objects; and a field to its components.

20. A memory for storing data for access by a runtime environment for executing on a data processing device an application comprising component definitions, said definitions describing complex data structures, comprising:
a data structure stored in said memory, said data structure comprising a plurality of arrays for storing structural description information, component field information, and objects comprising atomic elements described by the component definition, said arrays comprising references among the arrays to denote relationships between a component, and any fields and objects described by the component definition.

## Amended claims

### Amended claims in accordance with Rule 86(2) EPC.

**1.** A system for simplifying the representation of a component of an application to be executed by a data processing device (56), the component comprising a hierarchical data structure (307) described by component definition (64), the system comprising:
a runtime environment (66) for executing applications (24, 52, 54) comprising component definitions (64), the runtime environment (66) comprising computer executable code for:
accepting as input at least one component definition (64); and
defining a simplified data structure comprising a plurality of arrays (300) to represent a hierarchical data structure (307) described by the at least one component definition (64).

**2.** The system as claimed in claim 1, wherein the computer executable code is arranged to use said simplified data structure while executing an application (54, 56) defined by the at least one component definition (64) and while persisting the component described by the component definition (64).

**3.** The system as claimed in claim 1 or claim 2, wherein the computer executable code is arranged to traverse a particular one of the component definitions (64) in depth first traverse order to sequentially define the simplified data structure for the component definitions (64) within the arrays (300).

**4.** The system as claimed in any one of claims 1 to 3, wherein the computer executable code is arranged to define a plurality of arrays (300) for storing structural description information, component field information, and objects comprising atomic elements described by the component definition (64).

**5.** The system as claimed in claim 4, wherein the computer executable code is arranged to define a first array (302) for storing the structural description information of the component definition (64).

**6.** The system as claimed in claim 5, wherein the computer executable code is arranged to define a second array (304) for storing the component field information.

**7.** The system as claimed in claim 6, wherein the computer executable code is arranged to define a third array (306) for storing the objects comprising atomic elements of the component definition (64).

**8.** The system as claimed in any one of claims 4 to 7, wherein the structural description information comprises a definition type and a definition identifier to distinguish a particular simplified data structure among those having a common definition type.

**9.** The system as claimed in any one of claims 4 to 8, wherein the component field information is arranged to describe the properties of particular fields described by the component definition (64).

**10.** The system as claimed in any one of claims 1 to 9, wherein the computer executable code is arranged to associate the arrays (300) to provide a reference-based relationship between the information stored in the arrays (300).

**11.** The system as claimed in claim 10, wherein the relationships are selected from the group consisting of: a component to its fields; a component to its objects; a field to its objects; and a field to its components.

**12.** A method for simplifying the representation of a component of an application to be executed by a data processing device (56), the component comprising a hierarchical data structure (307) described by component definition (64), the method comprising:
provisioning a runtime environment (66) which executes applications (24, 52, 54) comprising component definitions (64) with computer executable code for:
accepting as input at least one component definition (64); and
defining a simplified data structure comprising a plurality of arrays (300) to represent the hierarchical data structures (307) described by the at least one component definition (64).

**13.** The method as claimed in claim 12, wherein the computer executable code uses said simplified data structure while executing an application (54, 56) defined by the at least one component definition (64) and while persisting the component described by the component definition (64).

**14.** The method as claimed in any one of claims 12 to 13, wherein the computer executable code traverses a particular one of the component definitions (64) in depth first traverse order to sequentially define the simplified data structure for the component definitions (64) within the arrays (300).

**15.** The method as claimed in any one of claims 12 to 14, wherein the computer executable code defines a plurality of arrays (300) for storing structural description information, component field information, and objects comprising atomic elements described by the component definition (64).

**16.** The method as claimed in claim 15, wherein the computer executable code defines a first array (302) for storing the structural description information of the component definition (64).

**17.** The method as claimed in claim 16, wherein the computer executable code defines a second array (304) for storing the component field information.

**18.** The method as claimed in claim 1,7 wherein the computer executable code defines a third array (306) for storing the objects comprising atomic elements of the component definition (64).

**19.** The method as claimed in any one of claims 12 to 18, wherein the computer executable code associates the arrays (300) to provide a reference-based relationship between the information stored in the arrays (300) and wherein the relationships are selected from the group consisting of: a component to its fields; a component to its objects; a field to its objects; and a field to its components.

**20.** A memory for storing data for access by a runtime environment (66) for executing on a data processing device (56) an application (54, 56) comprising component definitions (64), said definitions (64) describing hierarchical data structures (307), comprising:
a data structure stored in said memory, said data structure comprising a plurality of arrays (300) for storing structural description information, component field information, and objects comprising atomic elements described by the component definitions (64), said arrays (300) comprising references among the arrays (300) to denote relationships between a component, and any fields and objects described by the component definitions (64).
